# FASCICULE DE BREVET EUROPEEN

(11) **EP 0 474 845 B1**
(45) Date de publication et mention de la délivrance du brevet: **02.11.1994**
(21) Numéro de dépôt: 91907463.3
(22) Date de dépôt: 02.04.1991
(51) Int. Cl.: F16L 1/16, B63B 35/04, H02G 1/10

(54) **PROCEDE DE POSE DE CONDUITES TUBULAIRES FLEXIBLES UTILISANT UNE PLURALITE DE BATEAUX**
VERFAHREN ZUM VERLEGEN VON BIEGSAMEN ROHRFÖRMIGEN LEITUNGEN MITTELS EINER VIELZAHL VON SCHIFFEN
PROCESS FOR LAYING FLEXIBLE TUBULAR CONDUITS USING A PLURALITY OF SHIPS

(30) Priorité: 30.03.1990 FR 9004102
(43) Date de publication de la demande: 18.03.1992
(73) Titulaire: COFLEXIP, 92100 Boulogne-Billancourt (FR)
(72) Inventeur: MALOBERTI, René, F-94500 Champigny (FR); COUTAREL, Alain, F-75007 Paris (FR)
(74) Mandataire: Nony, Michel
(86) Numéro de dépôt international: FR9100263
(87) Numéro de publication internationale: WO9115696

(56) Documents cités:
- EP-A- 0 302 038
- DE-A- 2 456 141
- US-A- 4 117 692
- Petrole Informations, no. 1641, janvier 1988, Paris FR pages 97-100; "What flowline installation method"

## Description

L'invention se rapporte à un procédé de pose de conduites flexibles, notamment de conduites tubulaires flexibles et de câbles utilisant un bateau poseur et au moins un bateau ravitailleur.

La présente invention s'applique aussi bien aux conduites tubulaires flexibles qu'aux câbles notamment aux câbles électriques ci-après désignés conduites flexibles.

Pour assurer le transport des fluides, comme par exemple des hydrocarbures dans des installations d'exploitation en mer, il est connu de déposer sur le fond marin des conduites tubulaires flexibles. La pose des conduites tubulaires flexibles est assurée par un bateau poseur. Durant la pose, la conduite tubulaire flexible est stockée dans un panier assurant son déroulement au cours de la pose. La capacité d'un tel panier est limitée. Une fois que la longueur de conduite tubulaire flexible contenue dans le panier est déroulée, on arrête momentanément les opérations de pose. Il faut remarquer que les interruptions sont particulièrement pénalisantes dans le cas de pose de conduites tubulaires flexibles. En effet, un des nombreux avantages de ces conduites tubulaires flexibles réside dans la rapidité de leur pose. Cette rapidité permet notamment une immobilisation courte du bateau poseur dont le coût de revient journalier est très important.

D'autre part, il est connu d'utiliser des bateaux ravitailleurs pour assurer le ravitaillement, en dehors des opérations de pose du bateau poseur. Pour cela, on utilise des bateaux ravitailleurs dont le coût de fonctionnement journalier est très nettement inférieur à celui d'un bateau de pose.

On connaît par ailleurs par US-A-4 117 692 pour la pose de conduites rigides un procédé pour transférer une conduite à poser au bateau-poseur utilisant, comme support flottant, de la conduite à transférer, un touret remorque relié par une liaison d'attelage mécanique au navire poseur.

La présente invention se propose de fournir un procédé utilisant un ou plusieurs bateaux ravitailleurs ne nécessitant aucune liaison mécanique entre le ou les bateaux ravitailleurs et le bateau poseur.

Le procédé de pose de conduites tubulaires flexibles selon la présente invention est rendu plus rapide par l'utilisation de bateaux pour le ravitaillement en flexible du bateau poseur sur le site même de la pose. Ainsi, on bénéficie pleinement du fait que l'opération de pose proprement dite d'une conduite tubulaire flexible est très rapide. De plus il est possible d'utiliser plusieurs bateaux ravitailleurs se relayant pour alimenter, en continu, en conduites tubulaires flexibles le bateau poseur.

Le bateau poseur et/ou le bateau ravitailleur sont équipés de moyens de stockage de conduite flexible. On utilise par exemple, au moins un panier d'axe vertical et/ou au moins une bobine, avantageusement motorisée et avantageusement d'axe horizontal.

Dans une première variante de réalisation du procédé selon la présente invention, on alterne les étapes de pose et les étapes de transbordement des conduites flexibles. On effectue le chargement par exemple sur un panier de stockage de conduite flexible sur un bateau poseur. Une fois le panier chargé, on effectue la pose du tronçon de conduite flexible se trouvant dans le panier. Lorsque le panier est vide, on commence un nouveau cycle, en réapprovisionnant le panier en conduites flexibles. Il est possible d'utiliser une pluralité de bateaux ravitailleurs faisant la navette entre le port et le bateau poseur pour assurer la continuité des opérations de pose.

Dans une deuxième variante du procédé selon la présente invention, le bateau poseur effectue directement la pose d'une conduite flexible qui lui est fournie par un bateau ravitailleur. Avantageusement, un nouveau bateau ravitailleur plein prend la place du bateau ravitailleur précédent lorsque celui-ci est vide. Pendant ce temps, le bateau ravitailleur vide est libéré ou sera réapprovisionné dans le port ou auprès d'un autre bateau.

Dans une troisième variante de réalisation du procédé selon la présente invention, le ou les bateaux ravitailleurs fournissent simultanément une pluralité, par exemple deux conduites flexibles au bateau poseur. Une première conduite flexible est directement posée par un bateau poseur à partir du bateau ravitailleur. La seconde conduite flexible est stockée dans un moyen de stockage du bateau poseur, par exemple un panier de stockage d'axe de rotation verticale. Lorsque le bateau ravitailleur ne dispose plus de conduites flexibles, le bateau poseur poursuit la pose à partir des moyens de stockage. Pendant ce temps, le bateau ravitailleur peut se ravitailler en conduites flexibles par exemple dans un port, ou peut être remplacé par un autre bateau ravitailleur.

Dans une quatrième variante du procédé selon la présente invention, on utilise un bateau poseur comportant au moins deux moyens de stockage de conduites flexibles, par exemple deux paniers. Chaque panier joue alternativement leur rôle de réception de conduites flexibles à partir d'un bateau ravitailleur ou de paniers de pose de conduites flexibles sur le fond marin. Lorsque le panier assurant la pose de la conduite flexible est vide, on inverse les rôles des deux paniers.

L'utilisation d'un premier panier pour le transfert de la conduite flexible du bateau ravitailleur sur le bateau poseur et d'un second panier pour la pose de la conduite flexible permet d'assurer la continuité optimale du processus de pose. L'inversion des rôles des paniers est un processus relativement rapide.

Avantageusement, on utilise pour le procédé selon la présente invention des paniers ayant une grande capacité. Dans tous les cas, la conduite flexible est déroulée à partir du bateau ravitailleur vers le bateau poseur. C'est à dire que l'on transfère la conduite flexible de façon continue entre le bateau ravitailleur et le bateau poseur, avantageusement avec une vitesse linéaire sensiblement constante.

Dans un premier exemple de réalisation, la conduite flexible transférée a une forme en chaînette entre les deux bateaux. Dans un second exemple de réalisation, la conduite tubulaire flotte entre les deux bateaux lors de son transfert.

L'invention a principalement pour objet un procédé de pose, notamment sur fond marin, de conduites flexibles, caractérisé par le fait qu'il comporte une étape de transfert, sur le site de pose, d'une conduite flexible à poser entre au moins un bateau ravitailleur et un bateau poseur.

Les caractéristiques de la présente invention font l'objet de la revendication 1. Des caractéristiques avantageuses font l'objet des sous-revendications.

L'invention sera mieux comprise au moyen de la description ci-après et des figures annexées données comme des exemples non limitatifs parmi lesquels :
- la figure 1 est un schéma illustrant une première variante du procédé selon la présente invention ;
- la figure 2 est un schéma illustrant une deuxième variante du procédé selon la présente invention ;
- la figure 3 est un schéma illustrant une troisième variante du procédé selon la présente invention ;
- la figure 4 est un schéma illustrant une quatrième variante du procédé selon la présente invention,

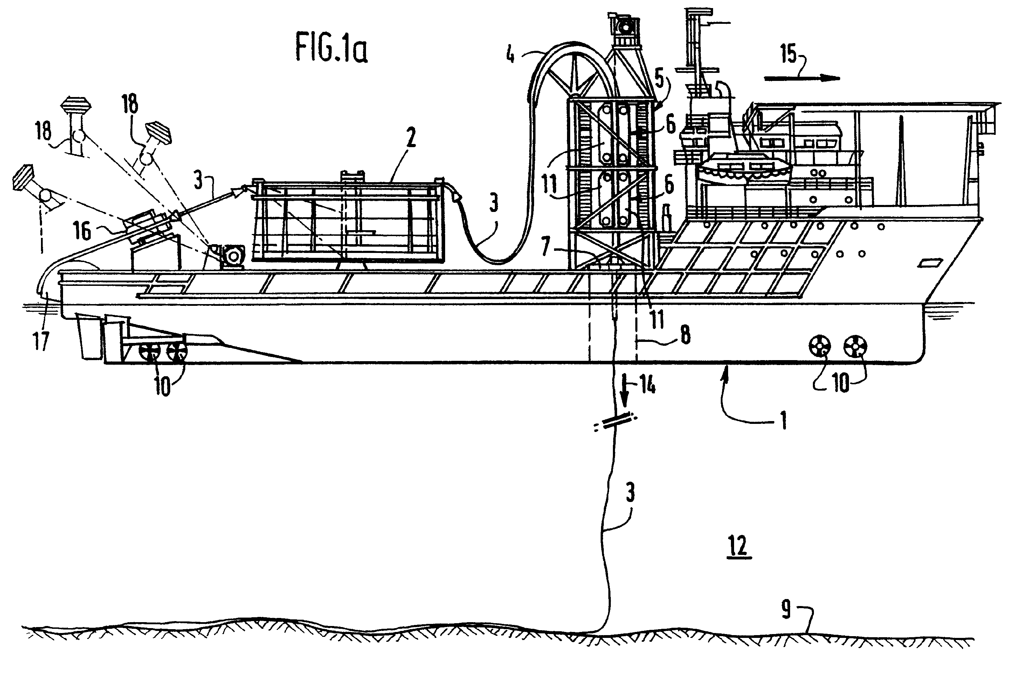

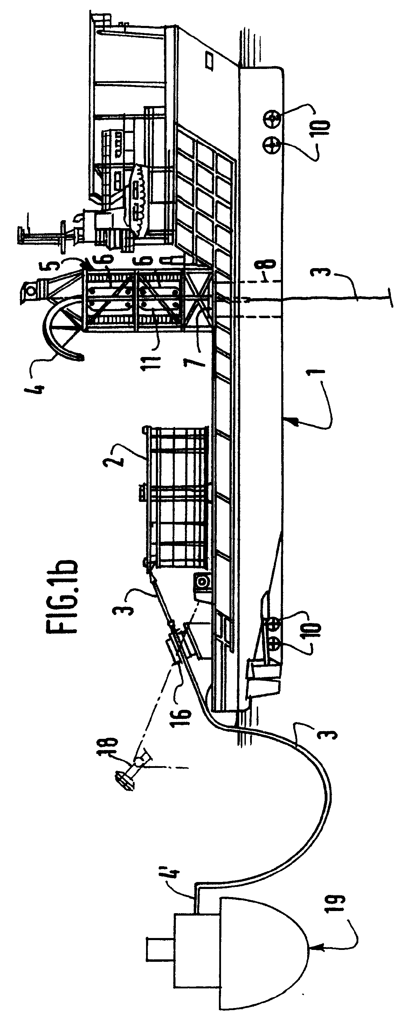

Sur les figures 1 à 4, on a utilisé les mêmes références pour désigner les mêmes éléments.

Sur les figures 1 à 4, on a illustré un procédé de pose de conduites tubulaires flexibles utilisant des moyens tensionneurs disposés sur la partie verticale de la trajectoire de la conduite tubulaire flexible. Il est bien entendu que l'utilisation d'un procédé de pose classique ne sort pas du cadre de la présente invention.

Dans la première variante le procédé selon la présente invention comporte une succession d'étapes de pose illustrée sur la figure 1a et d'étapes de transbordement de conduites tubulaires flexibles entre un bateau ravitailleur 19 et un bateau poseur 1 illustrées sur la figure 1b. A l'étape de pose de la figure 1a succède une étape de transbordement de la figure 1b, elle-même suivie d'une étape de pose de la figure 1a, ainsi de suite jusqu'à l'obtention de la pose d'une longueur de conduite tubulaire flexible 3 désirée, ou jusqu'à une interruption momentanée de la pose.

Sur la figure 1a, on a illustré un exemple de bateau poseur 1 de type perfectionné, comportant notamment des moyens 10 de positionnement dynamique.

Le bateau 1 comporte des moyens de stockage 2 de la conduite tubulaire flexible 3, des moyens de guidage 4 de la conduite tubulaire flexible 3 et des moyens tensionneurs 6.

Les moyens de stockage 2 comportent avantageusement un panier de forme sensiblement cylindrique d'axe vertical.

Les moyens de guidage comportent par exemple une roue, ou comme illustré sur la figure, une goulotte 4 permettent à la conduite tubulaire flexible 3 de prendre une trajectoire verticale. Entre le panier 2 et les moyens de guidage 4, la conduite tubulaire flexible 3 prend la forme d'une chaînette.

En sortie des moyens de guidage 4, on a disposé les moyens tensionneurs 6. Dans l'exemple illustré sur la figure, on a disposé en série deux moyens tensionneurs 6 montés sur un derrick 5 de forme sensiblement parallélépipède rectangle. D'autres formes, par exemple une forme pyramidale ne sortent pas du cadre de la présente invention. Les moyens tensionneurs 6 sont disposés verticalement en aval des moyens de guidage 4 et des moyens de stockage 2 et en amont d'une table de travail 7 permettant la manutention de la conduite tubulaire flexible 3. Les moyens tensionneurs 6 sont destinés à supporter le poids de la conduite tubulaire flexible 3 disposée verticalement jusqu'au fond marin 9. Les moyens tensionneurs 6 comportent par exemple une pluralité de chenilles 11. Par exemple, chaque moyen tensionneur 6 comporte 2, 3 ou 4 chenilles 11 qui exercent une force de serrage sur la conduite tubulaire 3. L'avance simultanée des chenilles 11 exerçant la force de serrage sur la conduite tubulaire 3 permet la descente de la conduite tubulaire 3 selon la flèche 14. Simultanément, le bateau poseur 1 avance, par exemple, selon la flèche 15, le bateau poseur 1 pouvant se déplacer, grâce aux moyens 10 de positionnement dynamique dans une direction quelconque.

Le fait d'utiliser des moyens tensionneurs 6 disposés verticalement permet de faire passer la conduite tubulaire 3 par une ouverture 8 dans le bateau poseur 1 appelée moon pool en terminologie anglo-saxonne. Cette disposition évite d'avoir les moyens tensionneurs 6 et la goulotte 4 placés à l'arrière du bateau. Une position arrière de la goulotte 4 compromet l'équilibre du bateau poseur 1.

Le bateau poseur 1 comprend des moyens permettant le transbordement en mer de conduites tubulaires flexibles 3 à partir d'un bateau ravitailleur 19 de la figure 1b. Dans l'exemple illustré sur la figure 1a, le moyen de transbordement disposé à l'arrière comporte une goulotte 17 et un moyen tensionneur 16. Le moyen tensionneur 16 comporte par exemple deux chenilles diamètralement opposées.

Quand le bateau 1 a épuisé la quantité de conduite tubulaire flexible 3 stockée, les moyens de stockage internes 2, on arrête simultanément la pose de la conduite 3 symbolisée par la flèche 14 et la progression du bateau poseur 1 symbolisée par la flèche 15. L'arrêt de la pose est effectué en gardant l'extrémité de la conduite tubulaire flexible sur le bateau 1. L'initialisation du transbordement est obtenue en amenant une extrémité de la conduite tubulaire flexible 3 du bateau ravitailleur 19 au bateau poseur 1. Par exemple, on transborde un câble attaché à ladite extrémité qui va être solidarisée à un câble tiré par un treuil. En tirant sur le câble, on amène l'extrémité de la conduite tubulaire flexible 3 à bord du bateau poseur 1. La conduite 3 passe par les moyens tensionneurs 16 pour aller vers le panier de stockage 2. Le transbordement illustré sur la figure 1b met en oeuvre des moyens de stockage (non représentés sur la figure) et des moyens de guidage 4′ du bateau de ravitaillement 19 permettant à la conduite tubulaire flexible 3 transbordée de former une chaînette se terminant sur les moyens de transbordement du bateau poseur 1, la goulotte 17 dans l'exemple illustré sur la figure 1. La chaînette formée par la conduite tubulaire 3 peut aussi bien plonger dans l'eau de mer que être uniquement suspendue dans l'air.

Avantageusement, lors du transbordement, on effectue le chargement complet du panier du bateau poseur 1. Ainsi, on diminue le nombre d'embouts nécessaires à la pose de la conduite tubulaire flexible.

Le bateau ravitailleur 19 comporte des moyens de stockage comprenant par exemple du même type que le panier 2 ou des tourets. Une fois l'opération de transbordement terminée, la conduite tubulaire flexible est amenée à partir du panier 2, par l'intermédiaire des moyens de guidage 4, et des moyens tensionneurs 6 au niveau de la table de travail 7. A ce niveau, on effectue l'assemblage des extrémités antérieures à la conduite tubulaire flexible 3 transbordée avec l'extrémité postérieure de la conduite tubulaire 3 déjà posée. L'assemblage est effectué par exemple par soudure, bridage ou vissage d'embouts.

A ce moment là, on peut reprendre l'opération de pose illustrée sur la figure 1a. Le bateau ravitailleur 19 peut soit accompagner le bateau poseur 1, notamment s'il est d'une capacité suffisante pour contenir le tronçon de conduite tubulaire flexible 3 nécessaire au prochain transbordement, soit repartir vers le port en vue d'un ravitaillement. L'utilisation d'une pluralité de bateaux ravitailleurs 19 pour effectuer le transbordement de conduites tubulaires flexibles 3 lors de chaque étape de transbordement illustré sur la figure 1b ne sort pas du cadre de la présente invention.

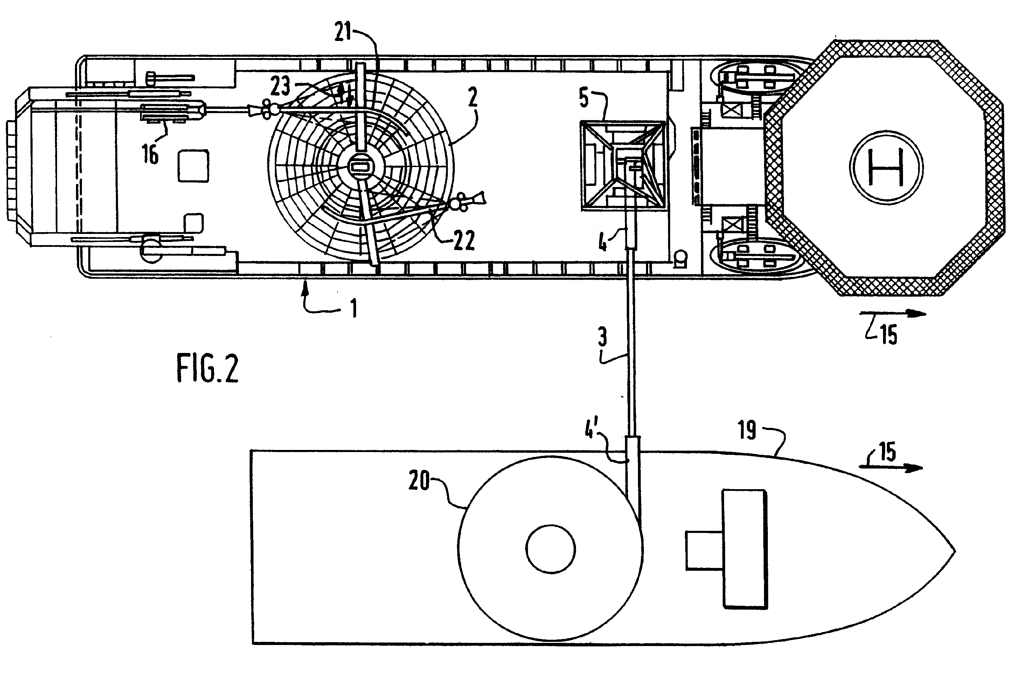

Sur la figure 2, on peut voir un exemple de pose de conduite tubulaire flexible utilisant un deuxième procédé selon la présente invention. Dans l'exemple illustré sur la figure 2, le bateau poseur 1 pose directement une conduite tubulaire flexible 3 fournie par un bateau ravitailleur 19. Dans l'exemple illustré sur la figure 2, le bateau ravitailleur 19 comporte un panier 20 similaire au panier 2 du bateau poseur 1.

La conduite tubulaire 3 forme directement une chaînette entre les moyens de guidage 4 du bateau 1 et des moyens de guidage 4′ du bateau 19. Comme illustré par les flèches 15, ces deux bateaux avancent côte à côte ayant sensiblement la même vitesse. Leur distance est par exemple sensiblement égale à 40 mètres.

Avantageusement, dès que le bateau ravitailleur 19 a épuisé son stock de conduites tubulaires flexibles, il est remplacé par un nouveau bateau ravitailleur plein (non représenté sur la figure).

Il est possible aussi bien de remplir le panier 2 du bateau poseur 1 que de le laisser vide. Le panier 2 rempli permet de continuer la pose de conduites tubulaires flexibles 3 en absence de bateau ravitailleur 19. Un panier 2 vide rend le bateau 1 plus léger, et plus stable.

Sur la figure 2, on peut voir le mécanisme de chargement et de déchargement de conduites tubulaires flexibles sur le panier 2. Pour le chargement, on utilise un bras loveur 21 dont le déplacement symbolisé par la flèche 23 permet l'enroulement de la conduite tubulaire flexible 3 sensiblement en spirale. De même, un bras déloveur 22 suivant le même mouvement illustré par la flèche 23 permet de décharger la conduite tubulaire flexible 3 à partir du panier 2 vers, par exemple, les moyens de guidage 4.

Il est bien entendu que l'utilisation d'un bateau poseur 1 ne comportant pas de moyens de stockage de conduites tubulaires flexibles ne sort pas du cadre de la présente invention.

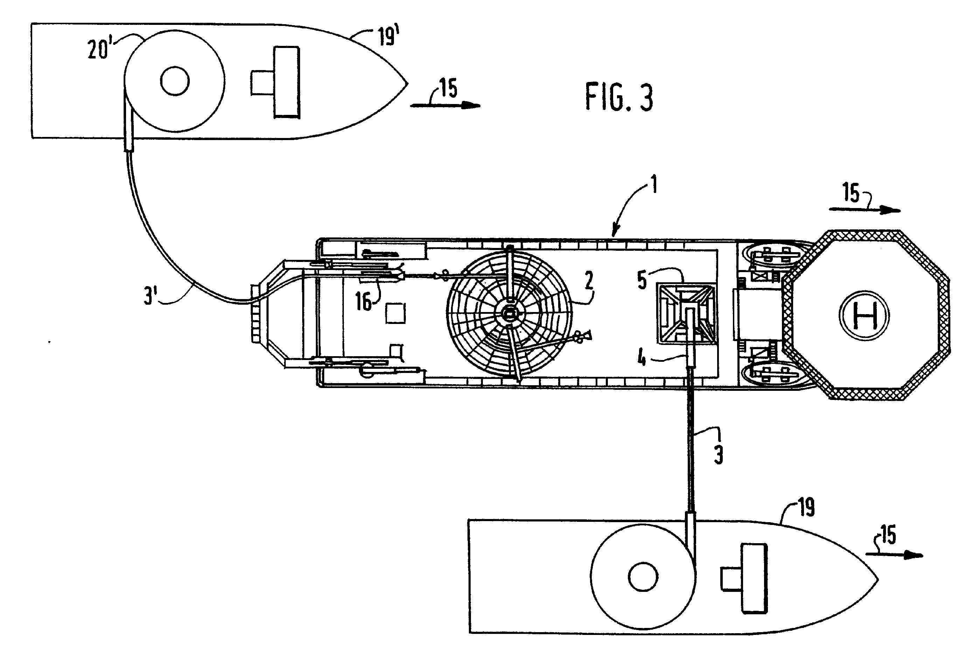

Sur la figure 3, on peut voir le troisième exemple du procédé selon la présente invention. Dans ce cas, deux tronçons de conduites tubulaires 3 et 3′ sont transférés simultanément entre le bateau ravitailleur et le bateau poseur. La conduite tubulaire flexible 3 fournie par le bateau ravitailleur 19 est directement posée par le bateau poseur 1. Simultanément, une conduite tubulaire 3′ est fournie par un bateau ravitailleur 19′ à partir de ses moyens de stockage 20′. La conduite 3′ est stockée dans le panier 2 du bateau 1. Dans la mesure où le bateau poseur 1 est en train de poser la conduite tubulaire flexible 3, les trois bateaux 1, 19, 19′ avancent simultanément avec sensiblement la même vitesse comme illustré par la flèche 15.

Les deux conduites tubulaires flexibles 3 et 3′ peuvent être fournies par un même bateau ravitailleur ou, comme illustré sur la figure 3 par des bateaux ravitailleurs différents. Le fait de charger le panier 2 du bateau 1 lui donne une autonomie de pose correspondant par exemple à 30000 m de conduites tubulaires flexibles d'un diamètre interne d'environ 7,5 cm (trois pouces) correspondant à un temps de pose de 6 à 7 jours, ou 5000 mètres de conduites tubulaires flexibles et un diamètre interne d'environ 30 cm (douze pouce) correspondant à un temps de pose de un jour à un jour et demi. Cet exemple est donné pour des conduites tubulaires flexibles 3 destinées à être posées à une profondeur de 1000 mètres et résistant à une pression interne de service de 210 bars (environ 3000 p.s.i). L'autonomie fournie par la présence du panier 2 permet de libérer le bateau ravitailleur 19 et/ou 19′.

Le bateau poseur et le bateau ravitailleur ont sensiblement la même vitesse moyenne. Cette vitesse est par exemple égale à la vitesse de pose, par exemple comprise entre quelques mètres à l'heure à 800 mètres à l'heure. Cette vitesse est de préférence comprise entre 300 et 500 mètres à l'heure, typiquement 300 mètres à l'heure. Le transfert de conduite tubulaire flexible entre les moyens de stockage du bateau ravitailleur 19 et le bateau poseur peut par exemple être effectué à la vitesse linéaire de 500 mètres à l'heure.

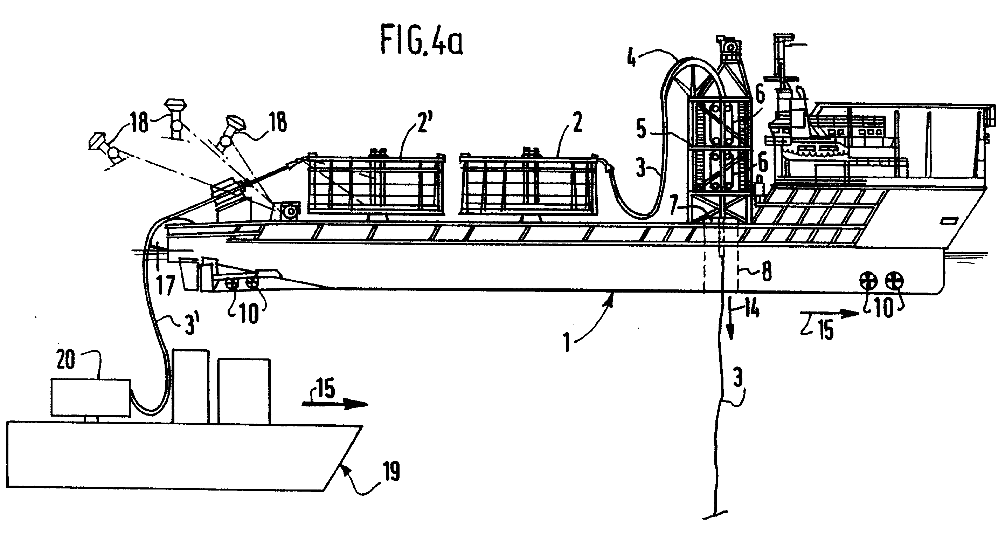

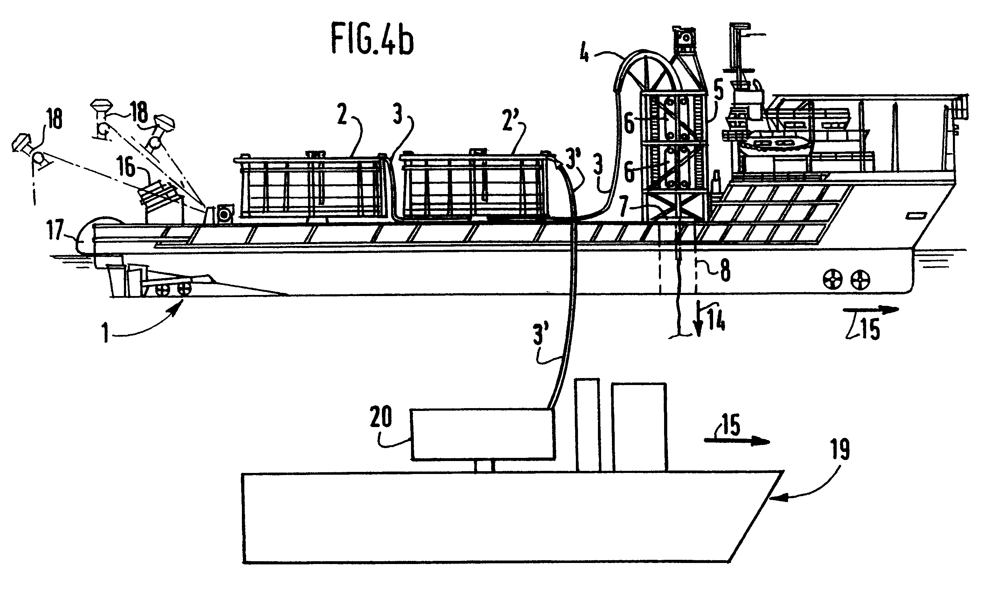

Sur la figure 4, on peut voir un quatrième exemple de procédé selon la présente invention mettant en oeuvre un bateau poseur 1 comportant deux paniers de stockage référencés 2 et 2′. Sur la figure 4a, le panier 2 permet la pose de conduites tubulaires flexibles 3 sur le fond marin, comme symbolisé par la flèche 14, le panier 2′ étant chargé avec une conduite tubulaire 3′ à partir du panier 20 d'un bateau ravitailleur 19. Une fois que le panier 2′ du bateau ravitailleur 1 est chargé avec la conduite tubulaire flexible 3′, le bateau ravitailleur 19 est libéré. Ceci peut intervenir avant la fin de la pose de la conduite tubulaire flexible 3 à partir du panier 2. Le bateau ravitailleur 19 peut alors se ravitailler dans un port pour, comme illustré sur la figure 4b permettre le ravitaillement du panier à partir duquel on est en train de poser la conduite tubulaire flexible 3. Il est bien entendu que l'utilisation d'une pluralité de bateaux ravitailleurs 19 se relayant auprès du bateau poseur 1 ne sort pas du cadre de la présente invention.

Dans l'exemple illustré sur la figure 4a, le bateau poseur 1 effectue la pose à partir du panier 2 placé immédiatement après le derrick 5. Le panier 2′ chargé avec la conduite tubulaire flexible 3′ à partir du bateau 19 est situé à l'arrière du bateau. Il est bien entendu que l'utilisation des paniers 2, 2′ répartis de part et d'autre de l'ouverture 8 du bateau 1 ne sort pas du cadre de la présente invention.

Dans l'exemple illustré sur la figure 4b, la conduite tubulaire flexible 3 est posée sur le fond à partir du panier arrière, qui porte sur la figure 4b, la référence 2. La conduite tubulaire 3 est amenée par des moyens de guidage horizontaux jusqu'au moyen de guidage 4 permettant son passage à la verticale au niveau du derrick 5. Le panier le plus proche de l'ouverture 8 servant au transbordement de la conduite tubulaire 3′ à partir d'un bateau ravitailleur 19 porte sur la figure 4b la référence 2′. La permutation des rôles des paniers 2, 2′ permet d'assurer la continuité de la pose de conduites tubulaires flexibles sur le fond marin.

Il est évident que lors du transfert, le bateau poseur et le bateau de ravitaillement ont sensiblement la même vitesse moyenne. Lors de la pose, le bateau ravitailleur asservit la vitesse sur la vitesse moyenne du bateau poseur.

L'invention s'applique principalement à la pose des conduites tubulaires flexibles de grande longueur destinées au transport d'hydrocarbures ainsi qu'à la pose de câbles électriques sous-marins sur le fond marin.

## Revendications

1. Procédé de pose de conduites à partir d'un bateau poseur, dans lequel les conduites à poser sont transférés audit bateau poseur, par déroulement sensiblement continu sur le site de pose depuis un support flottant comportant des moyens de stockage de conduites, caractérisé par le fait que pour poser des conduites flexibles, l'on met en oeuvre comme support flottant un bateau ravitailleur (19,19′), que l'on amène le bateau ravitailleur à se déplacer à la même vitesse que celle du bateau poseur (1), et que l'on transfère la conduite flexible (3) entre le bateau ravitailleur et le bateau poseur de telle manière qu'une partie de la conduite flexible se trouvant entre le bateau ravitailleur et le bateau poseur est suspendue en forme de chaînette et/ou flotte à la surface de l'eau.

2. Procédé selon la revendication 1, caractérisé par le fait que la conduite flexible transférée est posée directement par le bateau poseur (1).

3. Procédé selon la revendication 1, caractérisé par le fait que la conduite flexible transférée est chargée dans les moyens de stockage de conduites (2,2′) du bateau poseur (1).

4. Procédé selon la revendication 3, caractérisé par le fait que pendant le chargement de la conduite flexible transférée dans les moyens de stockage de conduites du bateau poseur, une seconde conduite flexible est posée par le bateau poseur (1), ladite seconde conduite étant alimentée depuis lesdits moyens de stockage de conduites du bateau poseur.

5. Procédé selon la revendication 3, caractérisé par le fait que, pendant le chargement de la conduite flexible transférée dans les moyens de stockage du bateau poseur, une seconde conduite flexible est posée par le bateau poseur, ladite seconde conduite étant alimentée depuis le bateau ravitailleur ou un second bateau ravitailleur amené à se déplacer à la même vitesse que celle du bateau poseur, une partie de la conduite flexible se trouvant entre le second bateau ravitailleur et le bateau poseur étant suspendue en forme de chaînette et/ou flottant à la surface de l'eau.

6. Procédé selon la revendication 3, caractérisé par le fait qu'il comporte une succession d'étapes de transfert (fig 1b) de conduites flexibles du bateau ravitailleur au bateau poseur et d'étapes de pose (fig 1a) de conduites flexibles par le bateau poseur.

## Patentansprüche

1. Verfahren zum Verlegen von Leitungen von einem Verlegeschiff aus, wobei die zu verlegenden Leitungen durch im wesentlichen kontinuierliches Abwickeln von einem mit einer Leitungs-Vorratseinrichtung versehenen schwimmenden Träger an der Verlegestelle auf das Verlegeschiff überführt werden, dadurch **gekennzeichnet,** daß zum Verlegen von flexiblen Leitungen als schwimmender Träger ein Versorgungsschiff (19, 19′) eingesetzt wird, das mit der gleichen Geschwindigkeit wie das Verlegeschiff (1) bewegt wird, und daß die flexible Leitung (3) zwischen dem Versorgungsschiff und dem Verlegeschiff derart überführt wird, daß ihr zwischen den beiden Schiffen befindlicher Teil in Form einer Kettenlinie hängt und/oder auf der Wasseroberfläche schwimmt.

2. Verfahren nach Anspruch 1, dadurch gekennzeichnet, daß die überführte flexible Leitung von dem Verlegeschiff (1) unmittelbar verlegt wird.

3. Verfahren nach Anspruch 1, dadurch gekennzeichnet, daß die überführte flexible Leitung in eine Leitungs-Vorratseinrichtung (2, 2′) des Verlegeschiffs (1) eingebracht wird.

4. Verfahren nach Anspruch 3, dadurch gekennzeichnet, daß während des Einbringens der überführten flexiblen Leitung in die Leitungs-Vorratseinrichtung des Verlegeschiffs (1) von diesem eine zweite flexible Leitung verlegt wird, die aus der Leitungs-Vorratseinrichtung des Verlegeschiffs zugeführt wird.

5. Verfahren nach Anspruch 3, dadurch gekennzeichnet, daß während des Einbringens der überführten flexiblen Leitung in die Vorratseinrichtung des Verlegeschiffs von diesem eine zweite flexible Leitung verlegt wird, die von dem besagten oder von einem zweiten sich mit gleicher Geschwindigkeit wie das Verlegeschiff bewegenden Versorgungsschiff zugeführt wird, wobei ein zwischen dem zweiten Versorgungsschiff und dem Verlegeschiff befindlicher Teil der flexiblen Leitung in Form einer Kettenlinie hängt und/oder auf der Wasseroberfläche schwimmt.

6. Verfahren nach Anspruch 3, dadurch gekennzeichnet, daß mit einer Folge von Schritten, in denen flexible Leitungen von dem Versorgungsschiff auf das Verlegeschiff überführt werden (Figur 1b), und Schritten, in denen flexible Leitungen von dem Verlegeschiff verlegt werden (Figur 1a), gearbeitet wird.

## Claims

1. A process for laying conduits from a laying ship, wherein the conduits to be laid are transferred to the said laying ship by a substantially continuous unrolling at the laying site from a floating support that comprises means for the storage of conduits, characterized in that, for laying the flexible conduits, a supply ship (19, 19′) is used as a floating support; that the supply ship is brought to be displaced at the same speed as that of the laying ship (1); and that the flexible conduit (3) is transferred between the supply ship and the laying ship in such a way that a portion of the flexible conduit disposed between the supply ship and the laying ship is suspended in a catenary shape and/or floats on the surface of the water.

2. A process according to claim 1, characterized in that the transferred flexible conduit is laid directly by the laying ship (1).

3. A process according to claim 1, characterized in that the transferred flexible conduit is loaded into conduit storage means (2, 2′) of the laying ship (1).

4. A process according to claim 3, characterized in that during the loading of the flexible conduit transferred into the conduit storage means of the laying ship, a second flexible conduit is laid by the laying ship (1), the said second conduit being fed from the said conduit storage means of the laying ship.

5. A process according to claim 3, characterized in that during the loading of the flexible conduit transferred into the storage means of the laying ship, a second flexible conduit is laid by the laying ship, the said second conduit being fed from the supply ship, or a second supply ship brought to be displaced at the same speed as that of the laying ship, a portion of the flexible conduit disposed between the second supply ship and the laying ship being suspended in a catenary shape and/or floating on the surface of the water.

6. A process according to claim 3, characterized in that it includes a succession of steps for transferring the flexible conduit from the supply ship to the laying ship (Fig. 1b) and steps for the laying of the flexible conduit by the laying ship (Fig.1a).
